# EUROPEAN PATENT APPLICATION

(11) **EP 4 567 657 A1**
(43) Date of publication of application: **11.06.2025**
(21) Application number: 24217206.2
(22) Date of filing: 03.12.2024
(51) Int. Cl.: G06F 30/3308, G06F 30/3312, G06F 30/367, G06F 111/08, G06F 119/06, G06F 119/12

(54) **SYSTEM AND METHOD FOR IMPROVING DYNAMIC VOLTAGE DROP STIMULUS COVERAGE IN SEMICONDUCTOR DESIGNS**

(30) Priority: 07.12.2023 US 202363607265 P; 07.11.2024 US 202418940107
(71) Applicant: Samsung Electronics Co., Ltd., Suwon-si, Gyeonggi-do 16677 (KR)
(72) Inventor: HOOVER, Andrew Paul, San Jose, CA, 95134 (US); ZHOU, Shuangjie, San Jose, CA, 95134 (US)
(74) Representative: Kuhnen & Wacker Patent- und Rechtsanwaltsbüro PartG mbB

(57) **Abstract**

An apparatus and method for analyzing dynamic voltage drops in an integrated circuit are disclosed. The method includes providing a gate-level netlist including registers and combinational gates; identifying a first register bus included in a plurality of register buses, the first register bus comprised of one or more of the registers included in the netlist; determining whether a complexity of a first group of combinational gates forming at least one timing path associated with a first bit in the first register bus is less than or equal to a first threshold; assigning the first group of combinational gates to a first group of cells; assigning the first group of cells into a first bus group associated with the first register bus in response to the complexity of the first group of combinational gates being less than or equal to the first threshold; and providing the first bus group to a dynamic voltage drop analysis tool.

## Description

### TECHNICAL FIELD

The disclosure generally relates to semiconductor design. More particularly, the subject matter disclosed herein relates to improvements to dynamic voltage drop mitigation in integrated circuits (ICs).

### SUMMARY

The present application addresses problems associated with dynamic voltage drops (DVD) in ICs. DVDs occur when multiple logic gates switch simultaneously, causing transient current surges that lead to localized voltage drops. As semiconductor process nodes shrink and device geometries become smaller, this issue becomes increasingly significant.

To address this type of problem, previous solutions have employed vector-based DVD simulations and Monte Carlo random stimulus techniques. These methods aim to predict and mitigate DVDs by simulating various switching scenarios and analyzing their impacts on the power grid.

One issue with the above approaches is that both vector-based and Monte Carlo random stimulus techniques have limitations in coverage. Vector-based simulations often fail to capture the simultaneous switching of all bits on a bus, while Monte Carlo simulations require a very large number of cycles to achieve statistically significant results. Consequently, these methods can miss critical DVD hotspots, leading to potential performance degradation and reliability issues.

To overcome these issues, systems and methods are described herein for identifying register buses in a semiconductor design and evaluating the complexity of the associated combinational logic. This may include identifying buses with more than a specific number of bits, tracing the fanin and fanout logic paths, and marking gates if their complexity is below a predefined threshold. These identified gates are then fed to a DVD analysis tool, which can correlate activity or use a higher switching factor to improve DVD hotspot coverage.

The above approaches improve on previous methods because they provide a more accurate and comprehensive way to predict and mitigate DVDs. By focusing on bus identification and evaluating path complexity, the systems and methods disclosed herein allow for better simulation coverage and reduce the chances of encountering unexpected hotspots. This, in turn, enhances the overall performance and reliability of ICs.

According to an aspect of the present disclosure, a method for analyzing DVDs in an IC is provided. The method includes the steps of providing a gate-level netlist including registers and combinational gates; identifying a first register bus included in a plurality of register buses, the first register bus comprised of one or more of the registers included in the netlist; determining whether a complexity of a first group of combinational gates forming at least one timing path associated with a first bit in the first register bus is less than or equal to a first threshold; assigning the first group of combinational gates to a first group of cells; assigning the first group of cells into a first bus group associated with the first register bus in response to the complexity of the first group of combinational gates being less than or equal to the first threshold; and providing the first bus group to a dynamic voltage drop analysis tool.

Identifying the first register bus may comprise identifying, as the first register bus, a register bus included in the plurality of register buses having a number of bits greater than or equal to a second threshold.

The complexity may be based on, at least one of a number of fan-in startpoints to the first bit and a number of fan-out endpoints from the first bit.

The complexity may be based on, at least one of a number of timing paths to the first bit and a number of timing paths from the first bit.

The identifying the first register bus may comprise identifying a register bus using register transfer level (RTL) to gate mapping file.

The method may further comprise combining the first bus group with a second bus group associated with a second register bus, wherein first bus group and second bus group have at least one gate in common.

The dynamic voltage drop analysis tool may apply a first activity factor to gates in the first bus group, and a second activity factor to one or more gates not in the first bus group, and the first activity factor may be higher than the second activity factor.

The dynamic voltage drop analysis tool may designate a plurality of gates in the first bus group to switch during the same cycle.

The first bit in the first register bus may be included in the first group of cells.

According to another aspect of the present disclosure, an apparatus for analyzing DVDs in an IC includes a memory storing a gate-level netlist including registers and combinational gates; and a processor. The processor is configured to identify a first register bus included in a plurality of register buses, the first register bus comprised of one or more of the registers included in the netlist, determine whether a complexity of a first group of combinational gates forming at least one timing path associated with a first bit in the first register bus is less than or equal to a first threshold, assign the first group of combinational gates to a first group of cells, assign the first group of cells into a first bus group associated with the first register bus in response to the complexity of the first group of combinational gates being less than or equal to the first threshold, and provide the first bus group to a dynamic voltage drop analysis tool.

The processor may further be configured to identify the first register bus by identifying, as the first register bus, a register bus included in the plurality of register buses having a number of bits greater than or equal to a second threshold.

The processor may further be configured to determine the complexity based on at least one of a number of fan-in startpoints to the first bit and a number of fan-out endpoints from the first bit.

The processor may further be configured to determine the complexity based on at least one of a number of timing paths to the first bit and a number of timing paths from the first bit.

The processor may further be configured to identify the first register bus using a register transfer level (RTL) to gate mapping file.

The processor may further be configured to combine the first bus group with a second bus group associated with a second register bus, and
wherein the first bus group and the second bus group have at least one gate in common.

The dynamic voltage drop analysis tool may apply a first activity factor to gates in the first bus group, and a second activity factor to one or more gates not in the first bus group, and the first activity factor may be higher than the second activity factor.

The dynamic voltage drop analysis tool may designate a plurality of gates in the first bus group to switch during the same cycle.

The first bit in the first register bus may be included in the first group of cells.

According to another aspect of the present disclosure, a method is provided. The method includes the steps of providing a gate-level netlist including a plurality of registers and combinational gates; identifying a register bus in the netlist; evaluating a complexity characteristic of a group of combinational gates forming at least one timing path associated with a bit in the register bus; grouping the combinational gates based on the evaluated complexity characteristic; and performing a voltage drop analysis based on the grouped combinational gates.

Identifying the register bus may comprise identifying, as the register bus, a register bus based on a number of bits being greater than or equal to a threshold.

### BRIEF DESCRIPTION OF THE DRAWINGS

The above and other aspects, features, and advantages of certain embodiments of the present disclosure will be more apparent from the following detailed description, taken in conjunction with the accompanying drawings, in which:
FIG. 1 illustrates three types of transistor structures used in ICs, according to an embodiment;
FIG. 2 illustrates a bus having a high DVD risk, according to an embodiment;
FIG. 3 is a flowchart illustrating steps involved in identifying and mitigating DVDs in ICs, according to an embodiment;
FIG. 4 illustrates a logic path for one bit of a register bus, according to an embodiment;
FIG. 5 illustrates a logic path for one bit of a register bus, according to an embodiment;
FIG. 6 illustrates a logic path for one bit of a register bus, according to an embodiment;
FIG. 7 illustrates a logic path for one bit of a register bus, according to an embodiment; and
FIG. 8 is a block diagram illustrating an electronic device in a network environment, according to an embodiment.

### DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an IC, system on-a-chip (SoC), an assembly, and so forth.

The present application provides a system and method for identifying and mitigating DVDs in ICs. The method involves analyzing a gate-level netlist to identify register buses and evaluating the complexity of the associated combinational logic paths. By doing so, the solutions proposed herein aim to improve the accuracy and effectiveness of DVD analysis tools. The method may be a computer-implemented method.

According to an embodiment, the method may begin by identifying register buses with more than a specific number of bits. It then traces the fanin and fanout logic paths connected to these registers. Gates within these paths are evaluated for their complexity, defined by, for example, the number of fanin startpoints, fanout endpoints, or timing paths. If the complexity is at or below a predefined threshold, these gates are marked and included in a bus group.

The identified bus groups are provided to a DVD analysis tool, which can then simulate the simultaneous switching of these gates with higher accuracy. This approach allows for a more comprehensive assessment of potential DVD hotspots, ensuring that critical areas are not overlooked during the design phase. By enhancing the predictive capabilities of DVD analysis tools, the solutions proposed herein contribute to the development of more robust and reliable ICs.

"Gate-level netlist" as used herein may refer to a detailed representation of an IC design, showing the logic gates and their interconnections. Some examples of "gate-level netlist" are netlists generated from register-transfer level (RTL) designs, which include the specific gates and their connections in the circuit.

"Register" as used herein may refer to a sequential element that can store one or more bits. Examples of "registers" include flip-flops, latches, and memories (random access memory (RAM), read only memory (ROM), various forms of non-volatile memory such as on-time programmable ROM (OTP), erasable programmable ROM (EPROM), electrically erasable programmable ROM (EEPROM), flash memory, etc.).

"Register bits" as used herein may refer to one or more bits stored in a register.

"Register bus" as used herein may refer to a group of register bits that are identified in the netlist and are considered together for analysis. Some examples of "register bus" are arrays of flip-flops or latches that store multiple bits of data. Additional examples of "register bus" could be bus inputs of a memory, or bus outputs of a memory. Since a memory typically has multiple input bits and/or multiple output bits, a "register bus" associated with a memory may be formed from a single memory. Similarly, since multi-bit flip-flops or multi-bit latches can include multiple bits, a "register bus" can be formed from one or more multibit flip-flops or multi-bit latches.

"Combinational gates" as used herein may refer to logic gates that perform operations based on the current inputs only, without any memory or feedback. Some examples of "combinational gates" are AND gates, OR gates, NAND gates, NOR gates, XOR gates, and inverters.

"Timing paths" as used herein may refer to the paths that signals travel through from one point in the circuit to another, ensuring that the circuit operates correctly within the desired timing constraints. Some examples of "timing paths" are paths from an input to a register, from one register to another, from a register to an output, or from an input to an output.

"Fan-in startpoints" as used herein may refer to timing startpoints. Some examples of "fan-in startpoints" are registers or the primary inputs of a block. A register may have one or more "fan-in startpoints" comprised of one or more registers and/or one or more primary inputs of a block. Similarly, an output port of a block may have one or more "fan-in startpoints" comprised of one or more registers and/or one or more primary inputs of a block. With respect to registers as fan-in startpoints, pins of the register such as clock pins or output pins may be alternatively used to define fan-in startpoints as opposed to the registers themselves.

"Fan-out endpoints" as used herein may refer to the points in the circuit where a signal is distributed from a single source to one or more destinations. Some examples of "fan-out endpoints" are inputs of a register or the primary outputs of a block. A register may have one or more "fan-out endpoints" comprised of inputs of one or more registers and/or one or more primary outputs of a block. Similarly, an input port of a block may have one or more "fan-out endpoints" comprised of inputs of one or more registers and/or one or more primary outputs of a block.

"DVD analysis tool" as used herein may refer to a tool used to simulate and analyze dynamic voltage drops in an IC design. Some examples of "DVD analysis tool" are tools used to identify potential voltage drop issues in IC designs.

"Activity factor" as used herein may refer to a parameter used in DVD analysis to represent the likelihood or frequency of a gate switching during operation. Some examples of "activity factor" are the probability values assigned to gates during simulation, indicating how often they are expected to switch.

"Correlated activity" as used herein may refer to the switching behavior of multiple gates that are considered together in DVD analysis because they can switch together in the same clock cycle. An example of "correlated activity" is a scenario where all bits of a register bus switch simultaneously, causing a significant current surge. Furthermore, combinational logic gates connected to these register bus bits may also have "correlated activity". When analyzed by a DVD analysis tool, cells with "correlated activity" can result in simultaneous switching.

"Register bus group" as used herein may refer to a collection of gates associated with a register bus that are analyzed together for DVD analysis. Some examples of "register bus group" are groups of gates connected through fan-in and/or fan-out paths to/from a multi-bit register bus, where the complexity of these paths meets specific criteria for inclusion in the analysis. In addition to gates, registers themselves (such as flip-flops, or latches) can be included in register bus groups.

"Combinational gates" as used herein may refer to logic gates that perform operations based on the current inputs and do not store state. Some examples of "combinational gates" are AND gates, OR gates, NAND gates, NOR gates, XOR gates, and inverters. The terms "logic gates" or "gates" may be used in place of "combinational gates".

"Endpoints" as used herein may refer to the final destinations of signal paths in a digital circuit where the signals are ultimately utilized or stored. Some examples of "endpoints" are the inputs to registers, the inputs to memory elements, or also output ports.

"Startpoints" as used herein may refer to the initial sources of signal paths in a digital circuit where signals originate. Some examples of "startpoints" are memory elements that drive subsequent logic paths, flip-flops, latches, or input ports. With respect to registers (for example memories, flip-flops, or latches) as startpoints, pins of the register such as clock pins or output pins may be alternatively used to define startpoints as opposed to the registers themselves.

"Cells" as used herein may refer to the basic building blocks used in the design of digital ICs. Some examples of "cells" are combinational logic gates (such as AND, OR, NAND, NOR, XOR, BUF, INV, multiplexers, arithmetic units such as adders, etc.), memories, flip-flops, and latches. These cells may be standardized components defined in a library and used during the synthesis process to convert a high-level RTL design into a gate-level netlist. Throughout this description, the terms combinational logic cells, combinational logic gates, combinational gates, logic gates, and gates shall be used interchangeably.

"Complexity" as used herein may refer to a metric used to evaluate the complexity of logic paths in terms of the number of fan-in startpoints, fan-out endpoints, or timing paths associated with a register bus. Some examples of "complexity" are the total number of fan-in startpoints to or fan-out endpoints from a specific register or the number of timing paths through the fan-in logic cone to a register, or the number or timing paths through the fan-out logic cone from a register. Additionally or alternatively, other examples of "complexity" may include the number of cells associated with one or more timing paths to an input of and/or from an output of a register, the number of cell pins associated with one or more timing paths to an input of and/or from an output of a register, the area of the cells associated with one or more timing paths to an input of and/or from an output of a register, the type of cells associated with one or more timing paths to an input of and/or from an output of a register (e.g., whether the cells are primarily single-input gates like inverters and buffers, or multi-input gates), the distance between cells associated with one or more timing paths to an input of and/or from an output of a register (e.g., larger distances could indicate lower complexity due to repeated path cells dominated by inverters and buffers), an activity level (obtained, for example, through digital simulation or activity propagation through logic gates) associated with at least one cell associated with one or more timing paths to an input of and/or from an output of a register (e.g., a large change in activity along a path, either increasing or decreasing from startpoint to endpoint, may indicate a higher complexity), and the power consumed by one or more cells associated with one or more timing paths to an input of and/or from an output of a register.

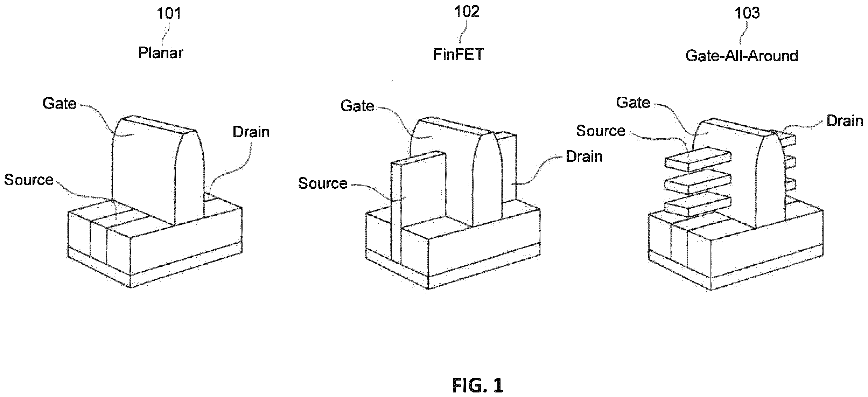

FIG. 1 illustrates three types of transistor structures used in ICs, according to an embodiment.

Referring to FIG. 1, a planar transistor structure 101, FIN field effect transistor (FinFET) structure 102, and a gate-all-around (GAA) transistor structure 103 are shown. The planar transistor structure 101 represents a traditional transistor structure where the gate is placed over a flat channel connecting the source and drain. This design faces challenges in controlling leakage currents as the device dimensions shrink.

In the FinFET transistor structure 102, the gate wraps around a three dimensional channel that protrudes vertically and is thin, providing the gate an improved means to manage the electrical behavior over the channel compared to the planar structure. This enhanced control reduces leakage currents and is more suitable for smaller technology nodes, allowing for improved performance and efficiency.

The GAA transistor structure 103 takes the three-dimensional concept further by surrounding the channel with the gate on all sides. This structure provides superior electrostatic control over the channel, significantly reducing leakage currents and enhancing performance for more advanced semiconductor processes.

As transistors and other components on the ICs become smaller, several issues arise. For example, shrinking geometries increase current density because more transistors are packed into a smaller area, each requiring a certain amount of current to operate. Higher current density leads to increased transient currents when multiple gates switch simultaneously, exacerbating DVDs.

In addition, as the metal interconnects used to connect these transistors become narrower and thinner, their resistance increases. The equation DVD=IR highlights this relationship, where DVD is directly proportional to the current (I) flowing through the interconnects and the resistance (R) of those interconnects. With both current and resistance increasing due to these advancements in technology, the resulting voltage drops are more significant.

FinFETs (e.g., FIN structure 102) can consume more current than planar (e.g., planar transistor structure 101) transistors because the vertical fin can introduce more transistor channel width than is possible in the same area for a planar transistor. Similarly, GAA transistors (e.g., GAA transistor structure 103) can consume more current than FinFETs in the same area because GAA transistors can stack more channel width in the same area. This progression in technology from planar to FinFET to GAA increases current density, causing the DVD issue to escalate as technology nodes progress. Because of this escalating DVD issue, solutions to DVD analysis and mitigation are needed.

Logic channels pose a high risk for DVDs due to the forced simultaneous activity within a confined area. Unlike an open sea of gates, where gate placement is relatively unconstrained, logic channels have highly constrained gate placement. This confinement means that when multiple gates switch simultaneously, the resulting transient currents are concentrated within a small area, leading to significant DVDs.

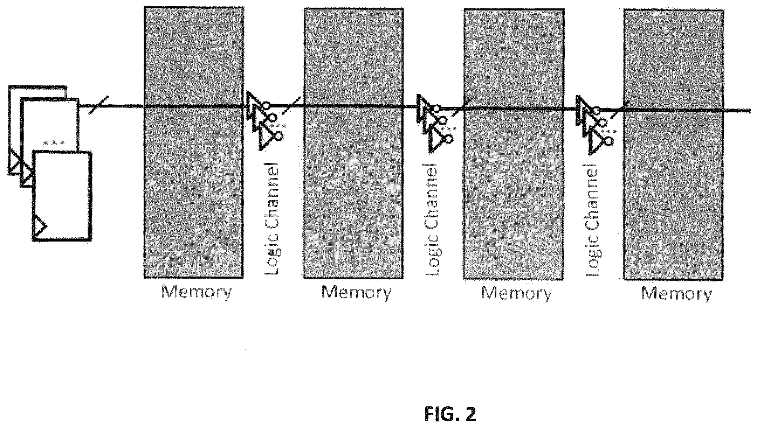

FIG. 2 illustrates a bus having a high DVD risk, according to an embodiment.

Referring to FIG. 2, logic channels are represented as narrow regions between memory blocks. The figure highlights the constrained placement of gates within the logic channels (shown as inverters), emphasizing the increased risk of DVDs in these regions. The repeated bus structure within these logic channels emulates real-world scenarios where logic channels between memory blocks can lead to high DVD risks. When a large number of inverters are part of the same bus, then they can switch simultaneously when the clock signal triggers the registers feeding them. This simultaneous switching can cause a significant DVD in that local region of the circuit, creating a hotspot that can affect the overall power integrity of the design.

In FIG. 2, the registers (symbolized by their electronic symbol) on the left may be considered a register bus. The inverters (symbolized by their electronic symbol) in the memory channel (Logic Channel) may be considered a register bus group (or group, or bus group) identified by this disclosure and described herein, based on the register bus fan-out. In some embodiments, the registers themselves of the register bus may also be included in the register bus group.

Many DVD analysis techniques often fall short in accurately capturing simultaneous switching events and their impact on voltage drops in these tightly packed logic channels because they often rely on random stimulus during simulations. Specifically, these tools might run for many clock cycles (e.g., 100, 1,000, or 10,000 cycles) and apply a probabilistic approach to determine whether each gate switches during a given cycle. For example, if using a 10% probability, the tool may pick a random number between 0 and 1 for each gate, and if the number is less than 0.1, the gate switches during that cycle.

The problem with this method is that it does not adequately stimulate simultaneous activity among gates. Real-world designs can have scenarios where a large number of gates switch simultaneously, leading to significant DVDs. Random stimulus approaches are unlikely to capture these worst-case scenarios because they only simulate an average behavior rather than specific patterns that cause simultaneous switching.

Solutions described herein involve identifying register buses and evaluating the complexity of associated combinational logic paths to provide a more precise analysis of potential DVD hotspots.

It should be noted that the logic channels represented in FIG. 2 are for exemplary purposes only. DVD hotspots caused by correlated activity on buses can also occur in place and route "sea of gates" regions. The embodiments described in this disclosure are not limited to the exemplary structure shown in FIG. 2.

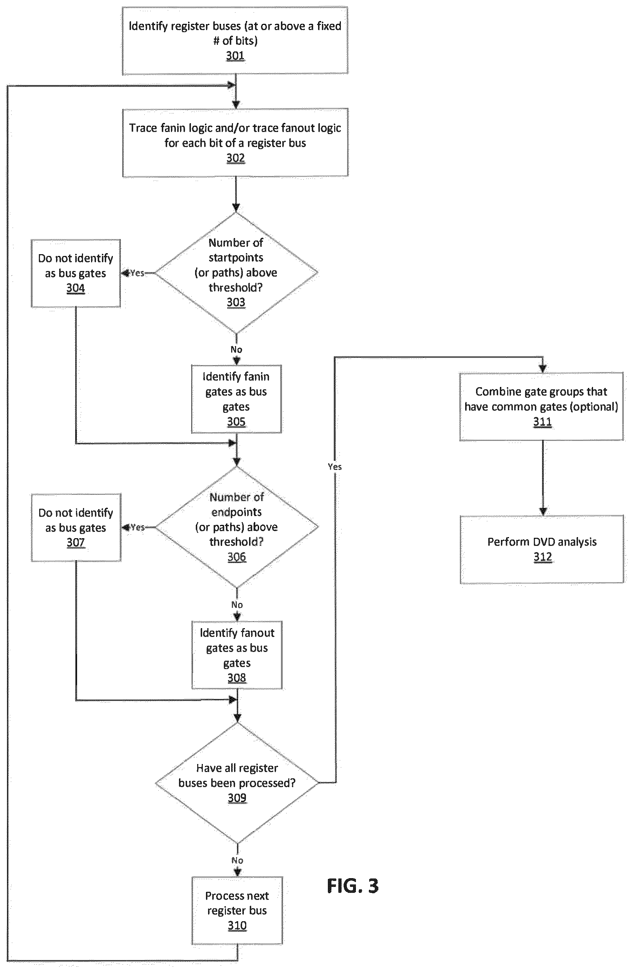

FIG. 3 is a flowchart illustrating steps involved in identifying DVDs in ICs, according to an embodiment. Some or all of the steps shown in FIG. 3 may be omitted, performed in a different order, or performed simultaneously. Furthermore, additional steps may be added. The method shown in FIG. 3 may be implemented by a controller or a processor based on instructions stored in a memory.

Referring to FIG. 3, in step 301 the process begins with the identification of register buses (e.g., arrays of flip-flops). In this step, the gate-level netlist is analyzed to locate register buses that have at or above a specified number of bits. This threshold ensures that only significant buses, which are more likely to impact DVDs, are identified and considered. For example, register buses with 8 or more bits may be identified. An RTL to gate mapping file can be used to identify the register buses, specifying the correspondence between RTL-level register names and their gate-level representations.

The RTL to gate mapping file identifies register buses in the IC. This file bridges the high-level design described in RTL with its gate-level implementation. The RTL code may specify the desired behavior of the circuit. During the translation process, the RTL code is converted into a gate-level netlist, which consists of actual logic gates, such as inverters, NAND gates, NOR gates, flip-flops, and latches, that implement the functionality described by the RTL code. The gate-level netlist is a detailed representation of the circuit, including the specific connections between gates.

The RTL to gate mapping file links each register in the RTL description to its corresponding gate-level representation. This mapping ensures that the synthesized design accurately implements the RTL's behavior. By providing the correspondence between high-level RTL names and gate-level instances, the mapping file enables tools to trace paths and evaluate the complexity of the logic associated with each register.

Steps 302-308, described below, may be performed in simultaneously or alternate orders. These steps refer to the process of determining the complexity of combinational logic connected to registers, and marking gates (in fan-in/fan-out) as a bus.

Complexity of combinational logic in the context of DVD in ICs may refer to one or both the number of startpoints on fan-in paths and the number of endpoints on fan-out paths, as well as the number of timing paths. Fan-in complexity may involve the number of startpoints (registers or block inputs) a register or block output receives, where high fan-in complexity indicates many startpoints converging into a single register or block output. Low fan-in complexity may indicate that these fan-in gates are more likely to switch in the same cycle as gates on other bits of the same bus, and thus only fan-in logic cones below a threshold complexity are identified as bus gates. Fan-out complexity, conversely, may refer to the number of endpoints (registers or block outputs) a register or block input drives. Low fan-out complexity may indicate that these fan-out gates are more likely to switch in the same cycle as gates on other bits of the same bus, and thus only fan-out logic cones below a threshold complexity are identified as bus gates.

Additionally or alternatively, other examples of complexity may include the number of cells associated with one or more timing paths to an input of and/or from an output of a register, the number of cell pins associated with one or more timing paths to an input of and/or from an output of a register, the area of the cells associated with one or more timing paths to an input of and/or from an output of a register, the type of cells associated with one or more timing paths to an input of and/or from an output of a register (e.g., whether the cells are primarily single-input gates like inverters and buffers, or multi-input gates), the distance between cells associated with one or more timing paths to an input of and/or from an output of a register (e.g., larger distances could indicate lower complexity due to repeated path cells dominated by inverters and buffers), an activity level (obtained, for example, through digital simulation or activity propagation through logic gates) associated with at least one cell associated with one or more timing paths to an input of and/or from an output of a register (e.g., a large change in activity along a path, either increasing or decreasing from startpoint to endpoint, may indicate a higher complexity), and the power consumed by one or more cells associated with one or more timing paths to an input of and/or from an output of a register.

Timing paths may refer to the sequences of gates through which a signal travels from one register to another or from an input to an output. In one embodiment, the number of timing paths may be used as a criterion to determine the logic complexity. A smaller number of timing paths indicates simpler logic. As with the number of fan-in startpoints or fan-out startpoints described above, a number of timing paths below a threshold complexity may indicate that the gates forming the timing paths are more likely to switch in the same cycle as gates on other bits of the same bus, and are identified as bus gates. This may be applied to timing paths to a register bit or block output, and/or timing paths from a register bit or block input.

In step 302, the fan-in logic paths and fan-out logic paths are traced for each bit of a register bus (or block input bus, or block output bus). This may include the logic paths that feed into or out of the identified register buses. This involves identifying the number of fan-in startpoints (or the number of timing paths in the fan-in), and identifying the number of fan-out endpoints (or the number of timing paths in the fan-out), where signals from the register bus are distributed to multiple destinations. In alternative embodiments, the point in which the fan-in logic is traced may be different from the point in which the fan-out logic is traced. For example, in scenarios where only fan-in logic is being considered, then step 302 may only trace the fan-in logic without tracing the fan-out logic. Conversely, in scenarios where only fan-out logic is being considered, then step 302 may only trace the fan-out logic without tracing the fan-in logic. Furthermore, the tracing of the fan-in or fan-out logic may be set to occur directly before that logic is evaluated (e.g., considering startpoints or paths for fan-in or endpoints or paths for fan-out). Thus, for example, fan-out logic may be traced after fan-in logic is used to identify bus gates, or fan-in logic may be traced after fan-out logic is used to identify bus gates. As noted above, one or both of fan-in logic and fan-out logic can be traced and used to identify bus gates and perform DVD analysis. Typically, using both fan-in logic and fan-out logic provides more DVD hotspot coverage for analysis, but the present application is not limited to using both fan-in and fan-out logic, and embodiments using either fan-in logic or fan-out logic are encompassed by the solutions described herein.

In step 303, it is determined whether the traced fan-in logic exceeds a predefined threshold. If the number of fan-in startpoints or timing paths is above the threshold (Yes in step 303), the gates in the fan-in logic paths are not identified as bus gates in step 304. If the number of fan-in startpoints or timing paths is less than or equal to the threshold (No in step 303), then the gates in the fan-in logic paths are identified as bus gates in step 305, indicating that they are likely to toggle in the same cycle, and should be identified as bus gates to a DVD analysis tool.

Similarly, in step 306, it is determined whether the traced fan-out logic exceeds a predefined threshold. If the number of fan-out endpoints or timing paths is above the threshold (Yes in step 306), the gates in the fan-out logic paths are not identified as bus gates in step 307. If the number of fan-out endpoints or timing paths is less than or equal to the threshold (No in step 306), then the gates in the fan-out logic paths are identified as bus gates, indicating that they are likely to toggle in the same cycle, and should be identified as bus gates to a DVD analysis tool.

In one or more embodiments, when bus gates are identified, they may be added to a register bus group associated with a register bus and whether they were identified using fan-in or fan-out. Multiple register bus groups may be formed. For example, for a single register bus, bus gates identified in step 305 may be placed in a different group as bus gates identified in step 308. Furthermore, bus gates from one register bus may be placed in a different register bus group than bus gates from another register bus. In alternate embodiments, as few as one bus group may be used for all bus gates.

In one or more embodiments, registers included in the fan-in startpoints and/or fan-out endpoints may be included in the register bus group. In some embodiments, the register itself from the register bus being analyzed may be included in the register bus group.

In step 309, it is determined whether all register buses have been processed. If all the register buses have not been processed (No in step 309), then the next register bus is processed in step 310, and the process reverts back to step 302 to begin processing the next register bus. If all register buses have been processed (Yes in step 309), then the register bus groups that have common gates may be combined in step 311.

As mentioned above, some or all of the steps shown in FIG. 3 may be excluded according to various embodiments of the present Application. Thus, step 311 may optionally be omitted. The optional step of combining gate groups is useful for the DVD analysis tools because it simplifies the analysis process when gates belong to multiple register bus groups. In scenarios where gates in the fan-out path of one register bus overlap with gates in the fan-in path of another register bus, for example, combining these gates into a single bus group ensures that relevant interactions and potential hotspots are considered together.

In step 312 the identified bus gates are provided to a DVD analysis tool. The identified bus gates may also be referred to as a "bus group". The bus group may be provided to the DVD analysis tool by generating a list including each bus group. The list could be a text file or a data structure in a computer memory. Additionally, the list may be composed in the same tool used to perform DVD analysis. For instance, the DVD analysis tool may be capable of tracing the fan-in/fan-out paths and performing the threshold evaluation to identify bus gates, and structuring a list of bus groups to perform DVD analysis.

The DVD analysis tool uses this information of the identified bus gates to simulate and evaluate the potential DVDs in the IC, enabling identification of potential hotspots. The DVD analysis tool can enhance its accuracy in identifying potential DVDs by either correlating activity or using a higher switching factor.

When the tool correlates activity, it focuses on the simultaneous switching behavior of multiple gates that are part of a bus group. By correlating the activity of these gates (when one gate in the group should switch for a given clock cycle, then all gates in the group should switch for the given clock cycle), the tool can simulate more realistic scenarios where high simultaneous switching happens, thus predicting potential voltage drops more accurately. This approach ensures that the analysis considers the worst-case scenarios, where the impact of simultaneous switching is most pronounced.

Alternatively, the DVD analysis tool can use a higher switching factor for gates identified in the bus groups. This method assigns a higher switching factor (or activity factor) to these gates during simulation. For instance, while regular gates might have an activity factor of 10-50%, gates within identified bus groups might be assigned an activity factor of 100% (in which case these gates in the identified bus group would switch in every clock cycle).

Thus, according to the flowchart illustrated in FIG. 3, once the register buses are identified, each register is analyzed for path complexity. The path complexity may be evaluated based on the number of fan-in startpoints and fan-out endpoints associated with the register. Alternatively, the number of fan-in timing paths and/or the number of fan-out timing paths can be used. Alternate embodiments may use alternate definitions of complexity.

For example, suppose the path complexity criteria are set to a fan-in/fan-out of 1. When analyzing the fan-in of a register, if the number of startpoints exceeds this threshold, the associated combinational gates are not identified as bus gates for that register's fan-in. Similarly, when analyzing the fan-out of a register, if the number of endpoints exceeds the threshold, the combinational gates are excluded from the bus gates for that register's fan-out. In alternate embodiments, complexity criteria larger than 1 may be used.

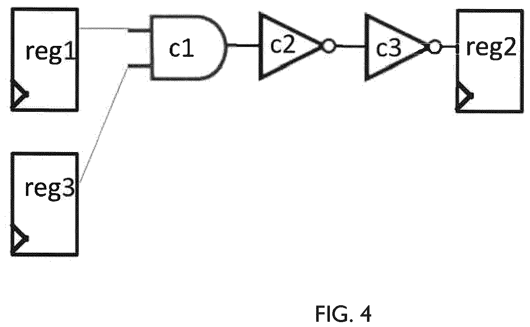

FIG. 4 illustrates a logic path for one bit of a register bus, according to an embodiment.

For the description of FIG. 4, as well as FIGS. 5-7, a complexity criterion (threshold) of 1 will used for exemplary purposes unless otherwise noted. In alternate embodiments, a complexity criterion of any number greater than 1 may alternatively be used.

Referring to FIG. 4, first register reg1 and second register second register reg2 may been identified as bits on separate register buses. When the fan-in of second register reg2 is analyzed, it has a startpoint fan-in of 2 (first register reg1 and third register reg3). Two fan-in startpoints are present (first register reg1 and third register reg 3). Since this exceeds the complexity threshold of 1, first to third gates c1, c2, and c3 do not qualify as bus gates in a group (also known as a bus group, or register bus group) associated with that particular register bus based on the second register reg2 fan-in analysis.

In contrast, when the fan-out of first register reg1 is analyzed, it has an endpoint fan-out count of 1 (second register reg2). Since the fan-out count is equal to or less than the complexity criteria of 1, first to third gates c1, c2, and c3 are identified as bus gates in the group associated with that particular bus based on the first register reg 1 fan-out analysis. Thus, first to third gates c1, c2, and c3 will be placed in a group of bus gates, along with any other combinational gates that meet the path complexity criteria when analyzing fan-out from other registers that are on the same register bus as first register reg1.

In addition, as mentioned above, timing paths can be used to identify bus gate groups. This may involve setting a timing path threshold for a register, and then determining how many timing paths are going in or out of that register and comparing the total to the threshold. The timing paths may include rising and falling transitions, and if the total is less than or equal to the threshold, then the gates may be included in the register bus group.

To further illustrate the timing path criteria, suppose a timing path criterion of 2 is used. When the fan-in to second register reg2 is analyzed, 4 timing paths may be present (first register reg1 rising to second register reg2, first register reg1 falling to second register reg2, third register reg3 rising to second register reg2, and third register reg3 falling to second register reg2). Since this count of 4 is larger than the complexity threshold of 2, first to third gates c1, c2, and c3 do not qualify as bus gates in a group associated with that particular register bus based on second register reg2 fan-in. However, when fan-out of first register reg1 is analyzed, the number of fan-out timing paths from first register reg1 is 2 (first register reg1 rising to second register reg2, and first register reg1 falling to second register reg2). Since this count of 2 is less than or equal the exemplary timing path complexity threshold of 2, first to third gates c1, c2, and c3 will be placed in a group of bus gates, along with any other combinational gates that meet the timing path complexity criteria when analyzing fan-out from other registers that are on the same register bus as first register reg1. In this exemplary embodiment, a timing path complexity threshold of 2 has been used. However, in alternative embodiments any other number may be used for path complexity criteria (for example, 5, 6, 8, 20, etc.). Timing path complexity criteria may also be determined based on logic structure used in a particular IC. For example, consider the case where first register reg1 is fed by 2 different possible clock paths, CP1 and CP2 (for example first clock path CP1 and second clock path CP2). This may result in 4 timing paths from first register reg1 to second register reg2 (CP1 to first register reg1 rising to second register reg2, CP1 to first register reg1 falling to second register reg2, CP2 to first register reg1 rising to second register reg2, and CP2 to first register reg 1 falling to second register reg2). In this case, it may be desirable to select a timing path complexity threshold of 4 or more.

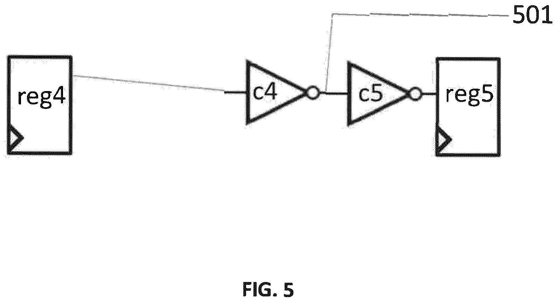

FIG. 5 illustrates a logic path for one bit of a register bus, according to an embodiment.

Referring to FIG. 5, suppose fourth register reg4 has been identified as a register that is part of a register bus, and fifth register reg5 has been identified as a register that is part of a different register bus. The fan-out analysis of fourth register reg4 shows that there are multiple fan-out endpoints. In this case, a first fan-out endpoint may be fifth register reg5, and a second fan-out endpoint may be 501. The endpoint 501 can be another register or some other endpoint such as a block output, for example. Thus, since two fan-out endpoints are shown with respect to fourth register reg4, then if the complexity threshold is set to 1, the fourth bus gate c4 and the fifth bus gate c5 would not be included in the register bus group (since 2>1). However, the fan-in analysis of fifth register reg5 yields only one fan-in startpoint at fourth register reg4. Thus, fourth and fifth gates c4 and c5 would be included in the register bus group associated with the register bus that includes fifth register reg5 based on fan-in analysis since they meet the complexity threshold (since 1<=1).

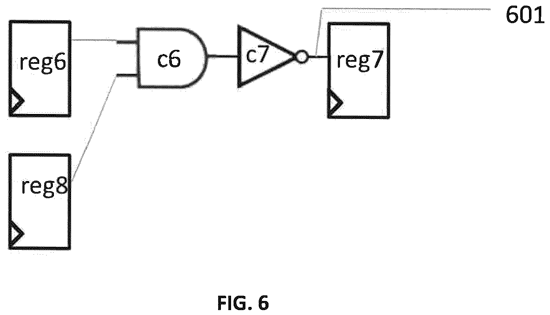

FIG. 6 illustrates a logic path for one bit of a register bus, according to an embodiment.

Referring to FIG. 6, suppose sixth register reg5 has been identified as a register that is part of a register bus, and seventh register reg7 has been identified as a register that is part of a different register bus. Assuming the complexity threshold is set to 1, sixth to seventh gates c6 and c7 are not identified as bus gates since they fail the path complexity criteria when analyzing fan-in of seventh register reg7, and when analyzing fan-out of sixth register reg5. With respect to the fan-in analysis of seventh register reg7, there are two fan-in startpoints at sixth register reg5 and reg8. Thus, gates c6 and c7 do not qualify as bus gates for the group associated with seventh register reg7 fan-in since they do not meet the complexity threshold (2> 1). With respect to the fan-out analysis of reg 6, there is one fan-out endpoint at seventh register reg7 and another fan-out endpoint 601, which may be another register or some other endpoint such as a block output. Thus, c6 and c7 do not qualify as bus gates for the group associated with sixth register reg5 fan-out since they don't meet the complexity threshold (2>1).

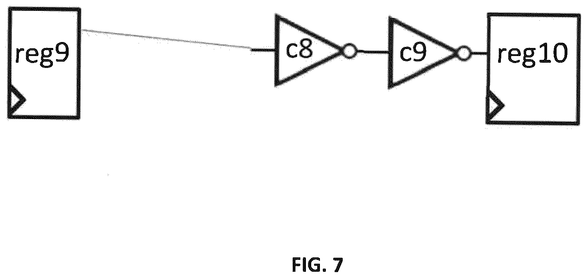

FIG. 7 illustrates a logic path for one bit of a register bus, according to an embodiment.

Referring to FIG. 7, suppose ninth register reg9 has been identified as a register that is part of a register bus, and tenth register reg 10 has been identified as a register that is part of a different register bus. If the complexity threshold is set to 1, eighth to ninth gates c8 and c9 may be identified as bus gates based on both ninth register reg9 fan-out (since it has an endpoint fan-out count of 1 at tenth register reg 10) and tenth register reg10 fan-in (since it has a startpoint fan-in count of 1 at ninth register reg9) analyses. Thus, in this case, eight to ninth gates c8 and c9 may be gates that are included in multiple register bus groups; one associated with the register bus that includes ninth register reg9 and another associated with the register bus that includes tenth register reg10. If DVD analysis tools have difficulties with gates being in multiple register bus groups, these combinational gates can be combined into a new single bus group (step 311 in FIG. 3), and the original two bus groups (one associated with the fan-out of the register bus that includes ninth register reg9 and the other associated with the fan-in of the register bus that includes tenth register reg10 for both eighth gate c8 and nineth gate c9) can be discarded.

Once the bus groups are identified, they are provided to a DVD analysis tool, which may correlate activity or assign various switching factors, as explained above with respect to step 312.

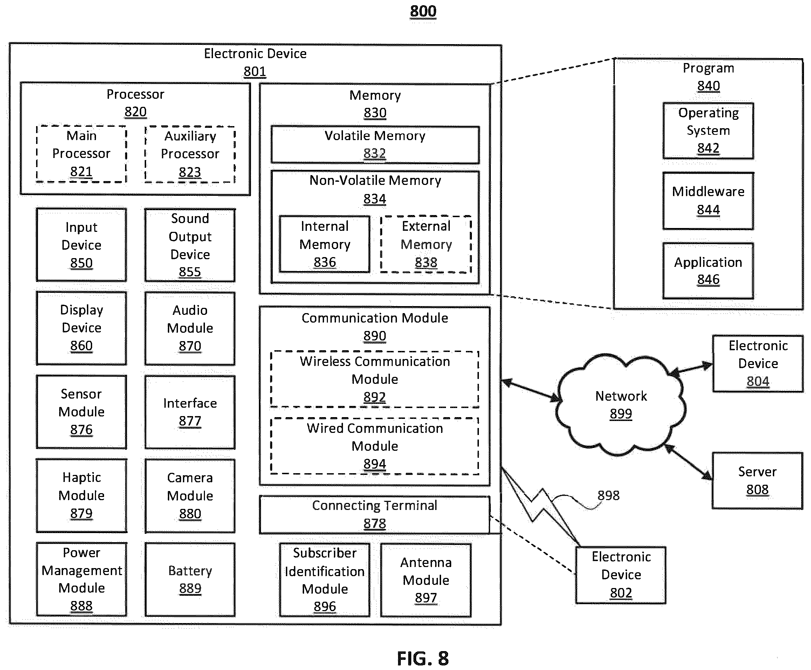

FIG. 8 is a block diagram of an electronic device in a network environment 800, according to an embodiment.

Referring to FIG. 8, an electronic device 801 in a network environment 800 may communicate with an electronic device 802 via a first network 898 (e.g., a short-range wireless communication network), or an electronic device 804 or a server 808 via a second network 899 (e.g., a long-range wireless communication network). The electronic device 801 may communicate with the electronic device 804 via the server 808. The electronic device 801 may include a processor 820, a memory 830, an input device 850, a sound output device 855, a display device 860, an audio module 870, a sensor module 876, an interface 877, a haptic module 879, a camera module 880, a power management module 888, a battery 889, a communication module 890, a subscriber identification module (SIM) card 896, or an antenna module 897. In one embodiment, at least one (e.g., the display device 860 or the camera module 880) of the components may be omitted from the electronic device 801, or one or more other components may be added to the electronic device 801. Some of the components may be implemented as a single IC. For example, the sensor module 876 (e.g., a fingerprint sensor, an iris sensor, or an illuminance sensor) may be embedded in the display device 860 (e.g., a display).

In the context of performing the method for analyzing DVDs in an IC, the hardware components described can be used in the implementation and execution of the method. Specifically, the method can be carried out by the processor 820, which may execute software instructions to analyze the gate-level netlist and perform the identification of register buses and the evaluation of fan-in and fan-out paths. The memory 830 can store the gate-level netlist, RTL to gate mapping files, and the data related to the complexity thresholds and identified bus groups.

The communication module 890 can facilitate the transfer of data between the electronic device 801 and external servers or other electronic devices, such as electronic device 804 or server 808, which may provide additional computational resources or store large datasets used in the analysis. Additionally, the display device 860 can be used to visualize the results of the DVD analysis, providing a user interface for engineers to review and address potential voltage drops.

The processor 820 may execute software (e.g., a program 840) to control at least one other component (e.g., a hardware or a software component) of the electronic device 801 coupled with the processor 820 and may perform various data processing or computations.

As at least part of the data processing or computations, the processor 820 may load a command or data received from another component (e.g., the sensor module 876 or the communication module 890) in volatile memory 832, process the command or the data stored in the volatile memory 832, and store resulting data in non-volatile memory 834. The processor 820 may include a main processor 821 (e.g., a central processing unit (CPU) or an application processor (AP)), and an auxiliary processor 823 (e.g., a graphics processing unit (GPU), an image signal processor (ISP), a sensor hub processor, or a communication processor (CP)) that is operable independently from, or in conjunction with, the main processor 821. Additionally or alternatively, the auxiliary processor 823 may be adapted to consume less power than the main processor 821, or execute a particular function. The auxiliary processor 823 may be implemented as being separate from, or a part of, the main processor 821.

The auxiliary processor 823 may control at least some of the functions or states related to at least one component (e.g., the display device 860, the sensor module 876, or the communication module 890) among the components of the electronic device 801, instead of the main processor 821 while the main processor 821 is in an inactive (e.g., sleep) state, or together with the main processor 821 while the main processor 821 is in an active state (e.g., executing an application). The auxiliary processor 823 (e.g., an image signal processor or a communication processor) may be implemented as part of another component (e.g., the camera module 880 or the communication module 890) functionally related to the auxiliary processor 823.

The memory 830 may store various data used by at least one component (e.g., the processor 820 or the sensor module 876) of the electronic device 801. The various data may include, for example, software (e.g., the program 840) and input data or output data for a command related thereto. The memory 830 may include the volatile memory 832 or the non-volatile memory 834. Non-volatile memory 834 may include internal memory 836 and/or external memory 838.

The program 840 may be stored in the memory 830 as software, and may include, for example, an operating system (OS) 842, middleware 844, or an application 846.

The input device 850 may receive a command or data to be used by another component (e.g., the processor 820) of the electronic device 801, from the outside (e.g., a user) of the electronic device 801. The input device 850 may include, for example, a microphone, a mouse, or a keyboard.

The sound output device 855 may output sound signals to the outside of the electronic device 801. The sound output device 855 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 860 may visually provide information to the outside (e.g., a user) of the electronic device 801. The display device 860 may include, for example, a display, a hologram device, or a projector and control circuitry to control a corresponding one of the display, hologram device, and projector. The display device 860 may include touch circuitry adapted to detect a touch, or sensor circuitry (e.g., a pressure sensor) adapted to measure the intensity of force incurred by the touch.

The audio module 870 may convert a sound into an electrical signal and vice versa. The audio module 870 may obtain the sound via the input device 850 or output the sound via the sound output device 855 or a headphone of an external electronic device 802 directly (e.g., wired) or wirelessly coupled with the electronic device 801.

The sensor module 876 may detect an operational state (e.g., power or temperature) of the electronic device 801 or an environmental state (e.g., a state of a user) external to the electronic device 801, and then generate an electrical signal or data value corresponding to the detected state. The sensor module 876 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 877 may support one or more specified protocols to be used for the electronic device 801 to be coupled with the external electronic device 802 directly (e.g., wired) or wirelessly. The interface 877 may include, for example, a high-definition multimedia interface (HDMI), a universal serial bus (USB) interface, a secure digital (SD) card interface, or an audio interface.

A connecting terminal 878 may include a connector via which the electronic device 801 may be physically connected with the external electronic device 802. The connecting terminal 878 may include, for example, an HDMI connector, a USB connector, an SD card connector, or an audio connector (e.g., a headphone connector).

The haptic module 879 may convert an electrical signal into a mechanical stimulus (e.g., a vibration or a movement) or an electrical stimulus which may be recognized by a user via tactile sensation or kinesthetic sensation. The haptic module 879 may include, for example, a motor, a piezoelectric element, or an electrical stimulator.

The camera module 880 may capture a still image or moving images. The camera module 880 may include one or more lenses, image sensors, image signal processors, or flashes. The power management module 888 may manage power supplied to the electronic device 801. The power management module 888 may be implemented as at least part of, for example, a power management integrated circuit (PMIC).

The battery 889 may supply power to at least one component of the electronic device 801. The battery 889 may include, for example, a primary cell which is not rechargeable, a secondary cell which is rechargeable, or a fuel cell.

The communication module 890 may support establishing a direct (e.g., wired) communication channel or a wireless communication channel between the electronic device 801 and the external electronic device (e.g., the electronic device 802, the electronic device 804, or the server 808) and performing communication via the established communication channel. The communication module 890 may include one or more communication processors that are operable independently from the processor 820 (e.g., the AP) and supports a direct (e.g., wired) communication or a wireless communication. The communication module 890 may include a wireless communication module 892 (e.g., a cellular communication module, a short-range wireless communication module, or a global navigation satellite system (GNSS) communication module) or a wired communication module 894 (e.g., a local area network (LAN) communication module or a power line communication (PLC) module). A corresponding one of these communication modules may communicate with the external electronic device via the first network 898 (e.g., a short-range communication network, such as BLUETOOTH^{™}, wireless-fidelity (Wi-Fi) direct, or a standard of the Infrared Data Association (IrDA)) or the second network 899 (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module 892 may identify and authenticate the electronic device 801 in a communication network, such as the first network 898 or the second network 899, using subscriber information (e.g., international mobile subscriber identity (IMSI)) stored in the subscriber identification module 896.

The antenna module 897 may transmit or receive a signal or power to or from the outside (e.g., the external electronic device) of the electronic device 801. The antenna module 897 may include one or more antennas, and, therefrom, at least one antenna appropriate for a communication scheme used in the communication network, such as the first network 898 or the second network 899, may be selected, for example, by the communication module 890 (e.g., the wireless communication module 892). The signal or the power may then be transmitted or received between the communication module 890 and the external electronic device via the selected at least one antenna.

Commands or data may be transmitted or received between the electronic device 801 and the external electronic device 804 via the server 808 coupled with the second network 899. Each of the electronic devices 802 and 804 may be a device of a same type as, or a different type, from the electronic device 801. All or some of operations to be executed at the electronic device 801 may be executed at one or more of the external electronic devices 802, 804, or 808. For example, if the electronic device 801 should perform a function or a service automatically, or in response to a request from a user or another device, the electronic device 801, instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the electronic device 801. The electronic device 801 may provide the outcome, with or without further processing of the outcome, as at least part of a reply to the request. To that end, a cloud computing, distributed computing, or client-server computing technology may be used, for example.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific exemplary teachings discussed above, but is instead defined by the following claims.

## Claims

1. A method comprising:
identifying (301) a register bus in a gate-level netlist including a plurality of registers (reg1 to reg10) and combinational gates (c1 to c9);
evaluating a complexity characteristic of a group of combinational gates forming at least one timing path associated with a bit in the register bus;
grouping the combinational gates based on the evaluated complexity characteristic; and
performing (312) a voltage drop analysis based on the grouped combinational gates.

2. The method of claim 1, further comprising:
providing the gate-level netlist.

3. The method of claim 1 or 2, wherein identifying the register bus comprises identifying, as the register bus, a register bus based on a number of bits being greater than or equal to a threshold.

4. The method of claim 1 or 2,
wherein identifying (301) the register bus comprises identifying a first register bus included in a plurality of register buses, the first register bus comprised of one or more of the registers included in the gate-level netlist;
wherein evaluating the complexity characteristic of the group of combinational gates comprises determining whether a complexity of a first group of combinational gates forming the at least one timing path associated with the first bit in the first register bus is less than or equal to a first threshold;
wherein grouping the combinational gates based on the evaluated complexity characteristic comprises:
assigning the first group of combinational gates to a first group of cells, and
assigning the first group of cells into a first bus group associated with the first register bus in response to the complexity of the first group of combinational gates being less than or equal to the first threshold; and
wherein performing a voltage drop analysis based on the grouped combinational gates comprises providing (S312) the first bus group to a dynamic voltage drop analysis tool.

5. The method of claim 4, wherein identifying the first register bus comprises identifying, as the first register bus, a register bus included in the plurality of register buses having a number of bits greater than or equal to a second threshold.

6. The method of claim 4 or 5, wherein the complexity is based on, at least one of a number of fan-in startpoints to the first bit and a number of fan-out endpoints from the first bit.

7. The method of any one of claims 4 to 6, wherein the complexity is based on, at least one of a number of timing paths to the first bit and a number of timing paths from the first bit.

8. The method of any one of claims 4 to 7, wherein identifying the first register bus comprises identifying a register bus using register transfer level, RTL, to gate mapping file.

9. The method of any one of claims 4 to 8, further comprising combining the first bus group with a second bus group associated with a second register bus,
wherein first bus group and second bus group have at least one gate in common.

10. The method of any one of claims 4 to 9, wherein the dynamic voltage drop analysis tool applies a first activity factor to gates in the first bus group, and a second activity factor to one or more gates not in the first bus group, and
wherein the first activity factor is higher than the second activity factor.

11. The method of any one of claims 4 to 10, wherein the dynamic voltage drop analysis tool designates a plurality of gates in the first bus group to switch during the same cycle.

12. The method of any one of claims 4 to 11, wherein the first bit in the first register bus is included in the first group of cells.

13. The method of any one of claims 1 to 12, wherein the method is a computer-implemented method.

14. An apparatus for analyzing dynamic voltage drops in an integrated circuit, the apparatus comprising means for carrying out the method of any one of claims 1 to 13.

15. The apparatus of claim 14, wherein the means for carrying out the method comprise:
a memory (830) storing the gate-level netlist; and
a processor (820) configured to carry out the method.
